# EUROPÄISCHE PATENTSCHRIFT

(11) **EP 0 845 505 B1**
(45) Veröffentlichungstag und Bekanntmachung des Hinweises auf die Patenterteilung: **04.10.2001**
(21) Anmeldenummer: 97119303.2
(22) Anmeldetag: 05.11.1997
(51) Int. Cl.: C09C 1/00, C09K 3/00, C09D 7/12, C04B 33/14, C08K 9/02, C03C 1/04

(54) **Kugelförmige Pigmente, Verfahren zu ihrer Herstellung und deren Verwendung**
Spherical colour pigments, process for their preparation and their use
Pigments colorés sphériques, procédé pour leur préparation et leur utilisation

(30) Priorität: 14.11.1996 DE 19647038
(43) Veröffentlichungstag der Anmeldung: 03.06.1998
(73) Patentinhaber: dmc2 Degussa Metals Catalysts Cerdec AG, 60287 Frankfurt am Main (DE)
(72) Erfinder: Jacobsen, Hauke, Dr., 79618 Rheinfelden (DE); Hartmann, Werner, Dr., 64832 Babenhausen (DE); Katusic, Stipan, 65779 Kelkheim (DE); Schulz, Andreas, Dr., 63263 Neu-Isenburg (DE); Giesecke, Norbert, 63546 Hammersbach (DE); Brandes, Ralph, Dr., 35415 Pohlheim (DE); Sperlich, Jörg, Dr., 63073 Offenbach (DE)

(56) Entgegenhaltungen:
- EP-A- 0 606 187
- EP-A- 0 681 989
- DE-A- 4 106 520
- DE-A- 4 411 104
- LABEAU M ET AL: "Synthesis of pure and Pd-doped and SnO2 particles" PROCEEDINGS OF THE 12TH INTERNATIONAL SYMPOSIUM ON REACTIVITY OF SOLIDS;MADRID, SPAIN SEP 24-30 1992, Bd. 63-65, 24. September 1992, Seiten 159-163, XP002096165 Solid State Ionics;Solid State Ionics Sep 1993
- PATENT ABSTRACTS OF JAPAN vol. 017, no. 663 (C-1138), 8. Dezember 1993 & JP 05 214262 A (KAO CORP), 24. August 1993

## Beschreibung

Die Erfindung richtet sich auf Pigmente aus im wesentlichen kugelförmigen Pigmentteilchen auf der Basis eines oxidischen oder silikatischen Trägermaterials mit feinverteiltem Edelmetall. Es handelt sich um purpurfarbene Pigmente. Ein weiterer Gegenstand richtet sich auf ein Verfahren zur Herstellung erfindungsgemäßer Pigmente sowie deren Verwendung.

Purpurfarbene Pigmente auf der Basis von kollidal verteiltem elementarem Gold in einer oxidischen oder silikatischen Matrix, etwa einer Glasfritte, sind bekannt. Derartige Purpurpigmente lassen sich beispielsweise herstellen durch reduktive Ausfällung von Gold aus einer wäßrigen Goldsalzlösung in Gegenwart einer Glasfritte oder eines Metalloxids oder durch Ausfällung von Cassius'schem Goldpurpur, Aufmischen desselben mit einer Glasfritte oder einem Metalloxid, Vorsintern bei 600 bis 800 °C und nachfolgende Vermahlung des gesinteren Materials. Gemäß DE-OS 44 11 104 lassen sich Purpurpigmente durch Inkontaktbringen eines feinpulvrigen silikatischen oder oxidischen Trägermaterials mit einer oder mehreren Goldverbindungen und nachfolgender thermischer Behandlung des Gemischs bei 150 bis 300 °C herstellen. Gemeinsam ist den nach den vorgenannten Verfahrensprinzipien hergestellten Purpurpigmenten, daß sie nicht kugelförmig sind, sondern die von der eingesetzten oxidischen oder silikatischen Matrix, etwa Glasfritten, bekannte unregelmäßige Oberflächenstruktur aufweisen. Gemäß DE-PS 32 29 837 lassen sich auch mit Metalloxiden beschichtete plättchenförmige Teilchen in kirschrote Pigmente überführen, indem sie nach einer Behandlung mit einer organischen Goldresinatlösung bei 600 °C getempert werden. Die plättchenförmige Struktur bleibt bei diesem Verfahren erhalten.

Möglichst feinteilige Pigmente sind überall dort von Interesse, wo die zu pigmentierenden Materialien sehr dünne Dekorschichten, Folien oder Fasern darstellen. Um bei anorganischen Pigmenten die gewünschte Feinteiligkeit zu erzielen, bedarf es oft aufwendiger Mahlprozesse. Der technische Aufwand nimmt mit abnehmendem mittleren Korndurchmesser erheblich zu, und gattungsgemäße Pigmente mit einem mittleren Korndurchmesser um oder unter 1 *µ*m sind durch die üblichen Zerkleinerungstechniken praktisch nicht mehr erhältlich; zudem besteht die Gefahr einer Farbbeeinflussung des Pigments durch Abrieb von eingesetzten Mahlhilfsmitteln und den verwendeten Mühlen. Die nach konventionellen Verfahren erhaltenen Pigmente weisen eine unregelmäßige Gestalt mit vielen Bruchkanten auf. Derartige Pigmente bereiten, selbst wenn sie eine hohe Feinheit und ein enges Kornspektrum aufweisen, Probleme beim Verspinnen damit eingefärbter Materialien. So kommt es beim Schmelzspinnen zu Korrosionserscheinungen an den Spinndüsen und/oder zu anderen Störungen, etwa Verblocken der Spinndüsen. Derartige Korrosionserscheinungen begrenzten bisher den Einsatz üblicher Pigmente mit nicht-kugelförmiger Gestalt.

Um Anwendungsprobleme durch die unregelmäßige Form der Pigmente zu vermeiden, besteht ein Bedarf an Pigmenten mit möglichst kugelförmigem Habitus, welche bei sehr geringerem mittleren Korndurchmesser, etwa einem solchen im Bereich von 0,1 bis 10 *µ*m, vorzugsweise zusätzlich ein sehr enges Kornspektrum aufweisen sollten.

Metallische und keramische kugelförmige Partikel im wenige Mikron bis Submikronbereich sind mittels der sogenannten Sprüh-Pyrolysetechnik zugänglich. Bei dieser Technik wird ein Aerosol aus einer Lösung oder Suspension von Stoffen, aus denen das herzustellende feine Pulver gebildet werden kann, in einen beheizbaren Reaktor eingebracht, wobei das Lösungs- oder Suspensionsmittel verdampft und feste Rückstandspartikel gebildet werden, die ihrerseits durch eine Zersetzungs- und/oder eine andere chemische Reaktion in das gewünschte Produkt überführt werden können. Kugelförmige Glaspulver mit einem Partikeldurchmesser zwischen 0,1 und 5 *µ*m sind gemäß JP-A 08091874 erhältlich durch Einsprühen feiner Tropfen einer oder mehrerer Lösungen von Vorstufen der im Glas enthaltenen Metalloxide in eine Flamme bei 800 bis 1800 °C und anschließende rasche Abkühlung. Gemäß EP-B 0 371 211 lassen sich durch Einsprühen einer verschiedene Metallsalze enthaltenden wäßrigen Lösung in einen Pyrolysereaktor, wobei Wasserstoff als Sprühgas verwendet wird, Keramikpulver aus kugelförmigen Partikeln mit einem Teilchendurchmesser im Bereich von 0,1 bis 3 *µ*m erhalten. Gemäß EP-A 0 681 989 ist es auch möglich, das Aerosol in eine unabhängig betriebene Knallgasflamme einzubringen, wobei eine geringere Flammentemperatur einstellbar ist und damit andere Modifikationen erhältlich sind. Eine weitere Modifizierung lehrt die DE-OS 43 07 333, wonach eine in einer organischen Phase dispergierte wäßrige Lösung der Metallverbindungen in Aerosolform dem Pyrolysereaktor zugeführt wird. Gemäß J. Chem. Soc. Japan (1987), Vol. 12, S. 2293-2300 ist es auch möglich, ein Aerosol einer wäßrigen Lösung eines Edelmetallsalzes in eine Wasserstoff-Sauerstofflamme (Knallgasflamme) zu leiten, wobei Edelmetallpulver erhalten werden. Während die Aerosol-Pyrolyse meistens in sogenannten Flammen-Pyrolysereaktoren durchgeführt wird, ist es auch möglich, die Pyrolyse in einem von außen beheizten Ofen durchzuführen.

M. Labeau et al. in Solid States Ionics 63-65 (1993) 159-163 lehren eine Synthese von Pd-dotierten SnO₂-Partikeln. Hierbei wird ein ultrafeines Aerosol, enthaltend eine lösliche Vorstufe von SnO₂ und eine lösliche Vorstufe von Palladium, bei 600 bis 900 °C pyrolysiert. Erhalten werden kugelförmige Partikel.

Gemäß EP 0 606 187 A1 werden etwa 8 bis 10 µm große SiO₂-oder ZrO₂-Partikel unter Einsatz von AuCl₃ beschichtet und daran schließt sich eine thermische Behandlung bei 600 °C oder eine Reduktion mit Natriumborhydrid an. Die ZrO₂-Partikel können, wie aus einem in dieser EP 0 606 187 zitierten Dokument folgt, auch kugelförmig sein, da sie mittels eines Sol-Gel-Verfahrens oder durch Sprühtrocknung erzeugt wurden. Goldpartikel befinden sich herstellungsbedingt nur auf der Oberfläche der ZrO₂-Partikel.

Die DE 41 06 520 betrifft Purpurpigmente, wobei sich kolloidales Gold auf einer Glasfritte, also einem nicht-kugelförmigen Träger, befindet.

Gemäß JP 05 214262 A (JP patent abstract 017 no.663) sind Glimmerpartikel bekannt, welche Goldpartikel auf einer Metalloxidschicht aufweisen.

Keines der bisher bekannten Verfahren unter Verwendung der Aerosol-Pyrolyse richtet sich auf die Herstellung von purpurfarbenen Pigmenten auf der Basis eines oxidischen oder silikatischen Trägermaterials mit auf und/oder in den Partikeln feinst verteilten Goldteilchen. Aufgabe der vorliegenden Erfindung ist demgemäß die Bereitstellung derartiger Pigmente aus im wesentlichen kugelförmigen Pigmentteilchen, nachfolgend auch kurz als kugelförmige Pigmente bezeichnet.

Gefunden wurden purpurfarbene Pigmente aus im wesentlichen kugelförmigen Teilchen mit einem mittleren Teilchendurchmesser von kleiner 10 um auf der Basis eines oxidischen oder silikatischen Trägermaterials mit auf und/oder in den Teilchen feinst verteiltem Edelmetall aus der Reihe Gold und gegebenenfalls zusätzlich Silber und/oder Platin, erhältlich durch Pyrolyse eines Aerosols, enthaltend eine Verbindung des Trägermaterials und Edelmetalls.

Die Pigmente enthalten ein oder mehrere Edelmetalle in elementarer Form und feinster Verteilung - die Edelmetallpartikel weisen kolloidale Abmessung auf. Die Edelmetallteilchen können sich innerhalb und/oder auf der Oberfläche des kugelförmigen Trägermaterials befinden. Durch Behandlung eines erfindungsgemäßen purpurfarbenen Pigments auf der Basis von SiO₂/Au (Beispiel 1) in Königswasser löst sich auf der Oberfläche befindliches Gold auf; da das verbleibende Pigment noch purpurfarben ist, wenngleich gegenüber dem Ausgangspigment aufgehellt, befindet sich ein Teil des Goldes auch innerhalb der Partikel. Ein purpurfarbenes Pigment auf der Basis SnO₂/Au (Beispiel 4) enthielt dagegen den größten Teil des Goldes auf der Oberfläche. Es wird angenommen, daß die Ausbildung feinster Goldpartikel auf der Oberfläche der Teilchen eine Folge teilweiser Verdampfung des Edelmetalls während des Herstellprozesses mit nachfolgender Abscheidung und Adsorption auf dem Trägermaterial ist. Auch wenn nach bisherigen Untersuchungen die Edelmetalle meistens in elementarer Form in den Pigmenten enthalten sind, werden andere Oxidationsstufen als 0 nicht ausgeschlossen.

Der Edelmetallgehalt der Pigmente liegt im allgemeinen zwischen 0,1 und 40 Gew.-%, bezogen auf das Pigment, vorzugsweise im Bereich von 0,5 bis 25 Gew.-%, bezogen auf das Pigment.

Erfindungsgemäße kugelförmige Pigmente sind purpurfarben und enthalten als Edelmetall Gold und gegebenenfalls zur Farbtonmodifizierung zusätzlich Silber und/oder Platin. Die Einsatzmenge der farbtonmodifizierenden Edelmetalle ist vorzugsweise geringer als 50 Gew.-%, bezogen auf den Goldgehalt; vorzugsweise liegt die Einsatzmenge an Silber und/oder Platin im Bereich bis etwa 10 Gew.-%, bezogen auf Gold. Zusätzlich können die Pigmente zwecks weiterer Farbtonmodifizierung in geringer Menge farbgebende Metalloxide enthalten. Die Farbe von Purpurpigmenten auf Au-Basis wird durch die Anwesenheit von zum Beispiel Co-Oxiden nach Blau verschoben.

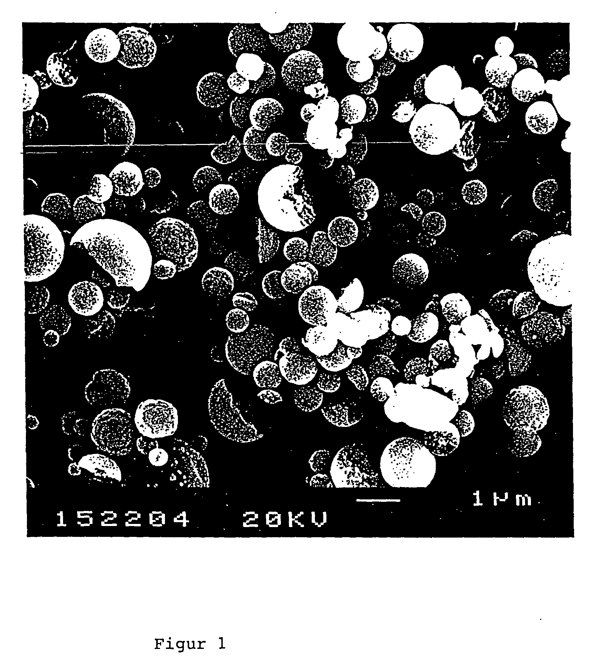

Die kugelförmige Gestalt erfindungsgemäßer Pigmente folgt aus Figur 1, welche eine REM-Aufnahme des Purpurpigments gemäß Beispiel 3 mit Gold als kolloidal verteiltem Edelmetall und ZrO₂ als Trägermaterial zeigt. Der Begriff "im wesentlichen kugelförmig" schließt auch Pigmentteilchen ein, welche eine deformierte Kugelform aufweisen, etwa durch Ausbildung einzelner Kristallflächen, sowie gebrochene Kugeln wie sie in Figur 1 erkennbar sind. Eine Deformierung der Kugelform durch Kristallisation des Trägermaterials wurde z. B. bei einem Pigment auf der Basis SnO₂/Au (Beispiel 4) beobachtet.

Der mittlere Teilchendurchmesser erfindungsgemäßer Pigmente ist kleiner 10 µm, vorzugsweise liegt er im Bereich zwischen 0,5 und 5 um und insbesondere zwischen 1 und 3 µm.

Zweckmäßigerweise ist das Partikelspektrum des Pigments sehr eng. Vorzugsweise sind im wesentlichen 100 % der Pigmentteilchen kleiner 10 *µ*m. Besonders bevorzugt weisen 80 % der Partikel einen Teilchendurchmesser im Bereich von 0,5 bis 5 *µ*m auf.

Das den kugelförmigen Pigmenten zugrundeliegende oxidische oder silikatische Trägermaterial ist im wesentlichen farblos. Der Begriff "im wesentlichen" bedeutet hier, daß die Anwesenheit farbtonmodifizierender Oxide, Mischoxide oder Silikate in einer Menge bis maximal 10 Gew.-%, insbesondere maximal 5 Gew.-%, bezogen auf das Pigment, nicht ausgeschlossen wird. Einsetzbar sind Metalloxide aus der zweiten bis fünften Hauptgruppe und zweiten bis sechsten Nebengruppe des Periodensystems. Beispiele für geeignete Oxide aus der Reihe der Oxide der Hauptgruppenelemente sind MgO, CaO, Al₂O₃, SiO₂, SnO₂ und Bi₂O₃; geeignete Metalloxide aus der Reihe der Nebengruppenelemente sind ZnO, Y₂O₃, La₂O₃, TiO₂, ZrO₂, Nb₂O₅, Ta₂O₅ und WO₃. Anstelle einfacher Oxide können auch Mischoxide die Basis für das Trägermaterial bilden; Beispiele hierfür sind farblose Spinelle, wie insbesondere MgAl₂O₄. Bei dem silikatischen Trägermaterial kann es sich um einfache Metallsilikate, wie Al-silikate und ZrSiO₄, handeln oder um Silikate, welche mehrere Metallkationen enthalten; geeignet sind auch Silikatgläser, etwa Borsilikatgläser.

Die erfindungsgemäßen kugelförmigen Pigmente sind durch ein Verfahren erhältlich, das die Schritte umfaßt:
(i) Zubereitung einer eine Gold- und ggf. zusätzlich eine Silber- und/oder Platinverbindung enthaltenden Lösung, Suspension oder Emulsion,
(ii) Überführung der Lösung, Suspension oder Emulsion in ein Aerosol,
(iii) Einbringen des Aerosols in einen direkt oder indirekt beheizten Pyrolysereaktor, dem gleichzeitig eine oder mehrere unter Pyrolysebedingungen ein oxidisches oder silikatisches Trägermaterial bildende Vorstufen in Aerosolform zugeführt werden,
(iv) Durchführung der Pyrolyse bei einer Temperatur oberhalb der Zersetzungstemperatur der Edelmetallverbindungen und mindestens der Bildungstemperatur des Trägermaterials aus den oxid- oder silikatbildenden Vorstufen und
(v) Abscheidung des Pigments aus dem Pyrolysegas.

Vorzugsweise enthält die Edelmetallverbindungen enthaltende Lösung, Suspension oder Emulsion der Stufe (i) gleichzeitig auch die oxid- oder silikatbildenden Vorstufen, so daß nur ein Aerosol einheitlicher Zusammensetzung dem Pyrolysereaktor zugeführt wird. Zweckmäßigerweise wird das Aerosol vor der Einbringung in den Pyrolysereaktor vorgetrocknet.

Im Pyrolysereaktor laufen in den einzelnen Partikeln die Schritte Zersetzung der Edelmetallverbindung zum Edelmetall, die Zersetzung und/oder Oxidation der oxid- oder silikatbildenden Vorstufen und Sintern unter Bildung des Oxids oder Silikats ab. Gegebenenfalls verdampft auch ein Teil des Edelmetalls, um sich in kälteren Zonen auf Trägerpartikeln wieder abzuscheiden. Als Ergebnis der Pyrolyse werden sphärische Partikel mit geringer spezifischer Oberfläche erhalten. Die Größenverteilung der erhaltenen Pigmentpartikel ergibt sich im wesentlichen direkt aus dem Tröpfchenspektrum des dem Reaktor zugeführten Aerosols und der Konzentration der eingesetzten Lösung oder, falls dem Reaktor eine Emulsion oder Suspension zugeführt wird, auch aus den Dispersionsgrad.

Die Beheizung des Reaktors kann direkt, also mittels einer Flamme, oder auch indirekt von außen, beispielsweise mittels eines elektrischen Ofens, erfolgen. Wegen des bei der indirekten Beheizung erforderlichen Temperaturgradienten von außen nach innen muß der Ofen wesentlich heißer sein als der für die Pyrolyse erforderlichen Temperatur entspricht. Eine indirekte Beheizung erfordert ein temperaturstabiles Ofenmaterial und eine aufwendige Reaktorkonstruktion, andererseits ist die Gesamtgasmenge niedriger als im Falle eines Flammenreaktors. Zur direkten Beheizung können übliche Brenngase einsetzt werden, vorzugsweise wird jedoch Wasserstoff verwendet (eine Wasserstoff-Luft-Flamme erreicht eine Temperatur von maximal 2045 °C). Durch das Verhältnis von Brenngas- zur Gesamtgasmenge kann die Temperatur im Reaktor gesteuert werden. Um die Gesamtgasmenge niedrig zu halten und damit eine möglichst hohe Temperatur zu erzielen, kann dem Reaktor anstelle von Luft als O₂-Quelle für die Verbrennung des Brenngases auch Sauerstoff zugeführt werden. Die Gesamtgasmenge umfaßt auch das Trägergas für das Aerosol sowie das Gas aus der Verdampfung des Lösungsmittels des Aerosols, etwa H₂O. Im Hinblick auf die einfachere Konstruktion eines Ofens mit direkter Beheizung wird diese Ausführungsform bevorzugt. Das oder die dem Reaktor zuzuführenden Aerosole werden zweckmäßigerweise unmittelbar in die Flamme geleitet. Während als Trägergas für das Aerosol meistens Luft bevorzugt wird, ist es auch möglich, Stickstoff, CO₂, O₂ oder ein Brenngas, also beispielsweise Wasserstoff, Methan, Propan oder Butan zu verwenden.

Die Temperatur im Reaktor liegt oberhalb der Zersetzungstemperatur der Metallverbindungen, und zwar bei einer zur Oxid- oder Silikatbildung ausreichenden Temperatur, üblicherweise im Bereich zwischen 500 und 2000 °C, vorzugsweise zwischen 800 und 1300 °C. Innerhalb des üblicherweise rohrförmig ausgebildeten Reaktors bildet sich ein Temperaturgradient aus. In Abhängigkeit von der Temperatur der Flamme können bei gleicher Aerosolzusammensetzung Pigmente mit unterschiedlicher Modifikation und damit unterschiedlicher Farbe gewonnen werden. Das Pyrolysegas wird im allgemeinen vor der Abtrennung der darin enthaltenen Pigmentpartikel teilweise abgekühlt. Durch rasches Abkühlen ist es möglich, eine zunächst gebildete Hochtemperaturmodifikation einzufrieren. Zweckmäßigerweise wird das Pyrolysegas vor der Abtrennung der Partikel soweit abgekühlt, daß ein Zusammensintern der Partikel ausgeschlossen wird. Die maximale Temperatur vor der Abtrennung der Partikel ist stoffspezifisch. Im allgemeinen ist eine Abkühlung auf eine Temperatur von etwa 500 °C ausreichend.

Nach der Bildung der kugelförmigen Pigmentpartikel können diese, sofern erwünscht, zwecks Modifizierung der Oberflächeneigenschaften noch behandelt werden. Beispielsweise kann eine solche Nachbehandlung eine Hydrophobierung sein, die sich unmittelbar an die Bildung der Partikel, gegebenenfalls nach teilweiser Abkühlung des Pyrolysegases, anschließt oder nach Abtrennung der Partikel durchgeführt wird.

Die Edelmetallverbindungen und oxid- oder silikatbildenden Vorstufen werden in Form eines oder mehrerer Aerosole dem Reaktor zugeführt. Es ist besonders zweckmäßig, dem Reaktor ein solches Aerosol zuzuführen, das durch Vernebelung einer Lösung erhalten wurde, welche ein oder mehrere Edelmetallverbindungen und ein oder mehrere oxidbeziehungsweise silikatbildende Vorstufen enthält. Auf diese Weise ist sichergestellt, das die Zusammensetzung der erzeugten Pigmentpartikel homogen ist.

Die Edelmetallverbindungen sowie die oxid- und silikatbildenden Vorstufen lassen sich in Form einer Lösung, einer Suspension oder einer Emulsion in ein Aerosol überführen. Die Verwendung einer Suspension ist nur dann sinnvoll, wenn die Größe der ungelösten Partikel deutlich kleiner ist als die Partikelgröße der Tröpfchen des Aerosols. Sofern eine Emulsion in ein Aerosol überführt wird, handelt es sich bei der Emulsion um ein wäßrigorganisches System, wobei die Edelmetallverbindungen und oxid- beziehungsweise silikatbildenden Vorstufen zweckmäßigerweise in der wäßrigen Phase gelöst sind. Gegenüber der besonders bevorzugten Ausführungsform der Erfindung, wonach eine die Edelmetallverbindungen und oxidbeziehungsweise silikatbildenden Vorstufen enthaltende Lösung in ein Aerosol überführt wird, ist der Einsatz der zuvor genannten Emulsion nur dann von Interesse, wenn Produkte mit Partikelgrößen im Submikronbereich hergestellt werden sollen.

Zur Herstellung der zur Aerosolbildung erforderlichen Lösung, Suspension oder Emulsion können sowohl organische als auch wäßrige Lösungsmittelsysteme herangezogen werden. Bevorzugt werden wäßrige Lösungsmittelsysteme, wie Gemische aus Wasser und wasserlöslichen Alkoholen, Ketonen, Carbonsäuren oder Ethern. Besonders bevorzugt wird jedoch ein im wesentlichen aus Wasser bestehendes Lösungsmittelsystem. Die Bevorzugung von im wesentlichen Wasser als Lösungsmittel ist außer dem naheliegenden wirtschaftlichen Aspekt auch darauf zurückzuführen, daß auf diese Weise Probleme einer Verfärbung der Pigmente durch gegebenenfalls eingeschlossenen unverbrannten Kohlenstoff vermieden werden.

Zur Herstellung einer Lösung eines oder mehrerer Edelmetallverbindungen in einem organischen oder organischwäßrigen Lösungsmittelsystem eignen sich aus der Dekortechnik bekannte Edelmetall-Resinate und -Thiolate. Derartige Verbindungen finden als Bestandteil von zum Beispiel Glanzgoldpräparaten Anwendung. Da wäßrige Lösungen, welche allerdings in geringer Menge organische Lösungsvermittler enthalten können, zur Aerosolbildung bevorzugt werden, richtet sich die Auswahl der Edelmetallverbindungen vorzugsweise auf Verbindungen mit ausreichender Wasserlöslichkeit. Wasserlösliche Goldverbindungen, die zur Herstellung von bevorzugten Purpurpigmenten geeignet sind, können beispielsweise ausgewählt werden aus der Reihe Lithium-, Natrium- und Kaliumdicyanoaurat(I), Tetrachlorogoldsäure und Hydrate davon, Lithium-, Natrium- und Kaliumdisulfitoaurat(I) und im wesentlichen wasserlösliche Gold(I)thiolate und -dithiolate.

Bei den Gold(I)thiolaten handelt es sich um Systeme der allgemeinen Formel Au-S-R-H und Au-S-R-X sowie Salze dieser Verbindungen, worin R für einen aliphatischen, aromatischen oder heterocyclischen Rest und X für eine wasserlöslichmachende Gruppe, insbesondere -COOH, -SO₃H und -NH₂ oder ein Salz davon steht. Geeignete Verbindungen der vorgenannten Formeln sind aus der EP-A 0 514 073 bekannt. Bevorzugte Gold(I)thiolate sind solche der nachstehenden Thiole: N-(2-Mercaptopropionyl)glycin, N-(3-Mercaptopropionyl)-glycin, N-(2-Mercaptoacetyl)glycin, 2-Mercaptoacetyl-histidin, 3-Mercaptopropionyl-histidin, L-Cystein, N-Acetylcystein, Glutathion, 2-Mercaptoethansulfonsäure, 2-Mercaptopyridin und Mercaptobernsteinsäure. Einsetzbar sind auch Gold(I)thiolate von Mercaptocarbonsäureestern.

Bei den wasserlöslichen Gold(I)dithiolaten handelt es sich um Verbindungen der allgemeinen Formel 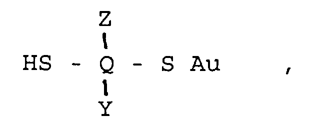 wie sie aus der EP-A 0 668 265 bekannt sind. Hierin bedeuten Q einen tetravalenten organischen Rest mit 2 bis 10 C-Atomen, Y eine hydrophile Gruppe, insbesondere -COOH sowie -COO⁻ Kat⁺, wobei Kat⁺ für Li⁺, Na⁺, K⁺, NH₄⁺ oder (C₁- bis C₃-alkyl)ₙ N⁺H₍₄₋ₙ₎ ist, und Z gleich Y oder H oder eine andere hydrophile Gruppe aus der Reihe Y. Bevorzugte Gold(I)dithiolate sind Monogolddimercaptobernsteinsäure, Monogold-2,3-dimercapto-1-propansulfonsäure sowie Monogold-α,α'-dimercaptoadipinsäure sowie deren Alkalimetallsalze oder Ammoniumsalze.

Bei wasserlöslichen Edelmetallverbindungen mit anderen Edelmetallen als Gold kommen vergleichbar strukturierte Verbindungen wie bei den Goldverbindungen infrage. Als Silberverbindung wird jedoch Silbernitrat bevorzugt.

Vorstufen für die oxid- und silikatbildenden Trägermaterialien sind insbesondere solche, welche unmittelbar oder nach Zusatz einer kleinen Menge eines organischen Lösungsvermittlers wasserlöslich sind. Besonders bevorzugt werden solche Vorstufen eingesetzt, die in der erforderlichen Konzentration wasserlöslich sind. Bei oxidbildenden Vorstufen der zweiten und dritten Hauptsowie Nebengruppe handelt es sich vorzugsweise um Halogenide und Nitrate; auch Acetate dieser Elemente sind einsetzbar, bei Aluminium auch das Sulfat; desweiteren können Elemente der genannten Haupt- und Nebengruppen auch in Form bekannter Komplexe und Chelatkomplexe eingesetzt werden.

Unter Siliciumverbindungen als Vorstufe für SiO₂ kommen in organischen Lösungsmitteln lösliche Organosilane sowie Umsetzungsprodukte von SiCl₄ mit niederen Alkoholen oder niederen Carbonsäuren infrage. Als wasserlösliche Siliciumquelle können wasserlösliche Organosilane, welche mindestens eine wasserlöslichmachende funktionelle Gruppen aufweisen, eingesetzt werden. Vorzugsweise wird ein wasserlösliches Organosilan oder Organosilanol der allgemeinen Formel (RO)₃Si-(CH₂)ₙ-X oder [(RO)₃Si-(CH₂)ₘ-NR'₃]⁺A⁻ verwendet, worin R und R' gleich oder verschieden sein können und bevorzugt für H, Methyl oder Ethyl, n für die Zahl 1, 2 oder 3, m für die Zahl 2 oder 3, X für die Gruppe -COOH oder -SO₃H oder ein Salz hiervon und A für ein Anion, insbesondere Chlorid, stehen. Zusätzlich können auch wasserlösliche Kondensate der genannten Organosilane beziehungsweise -silanole mit Si-O-Si Gliedern eingesetzt werden.

Als wasserlösliche Vorstufe für SnO₂ eignet sich insbesondere ein Hydrat von Zinntetrachlorid, gegebenenfalls auch ein Hydrat von Zinndisulfat. Als Vorstufen für die Oxide der Elemente der vierten Nebengruppe eignen sich insbesondere Titantetrachlorid, Zirkoniumtetranitrat oder Zirkonylchlorid (ZrO Cl₂ · 8 H₂O) sowie das entsprechende Hafniumoxychloridhydrat. Als Vorstufe für farblose Metalloxide der fünften Haupt- und Nebengruppe, also insbesondere Bi₂O₃ sowie Nb₂O₅ und Ta₂O₅, eignen sich insbesondere Bi(NO₃)₃, TaF₅ oder Ta₂O₅ · xH₂O (Tantalsäure). Als Vorstufe für Wolframoxid eignen sich Wolframsäure oder Wolframdioxydichlorid.

Zur Herstellung von Mischoxiden als Trägermaterial für die erfindungsgemäßen Pigmente werden entsprechende wasserlösliche Metallverbindungen in einem solchen stöchiometrischen Verhältnis in der Lösung eingesetzt, wie es dem stöchiometrischen Verhältnis der Metallatome im Mischoxid entspricht. Zur Herstellung des Spinells MgAl₂O₄ enthält demgemäß die in ein Aerosol zu überführende Lösung beispielsweise Magnesiumnitrat und Aluminiumnitrat in einem Molverhältnis von 1 zu 2.

Zur Herstellung von Pigmenten mit einem silikatischen Trägermaterial enthalten die in ein Aerosol zu überführenden Lösungen sowohl eine Quelle für SiO₂ und mindestens eine Quelle für ein weiteres Metalloxid. Hierbei können die zuvor genannten Quellen für die Metalloxide und SiO₂ Verwendung finden. Die Quelle für SiO₂ und das oder die weiteren Metalloxide sind in dem gewünschten stöchiometrischen Verhältnis in der wäßrigen oder wäßrig/organischen Lösung einzusetzen. Zur Herstellung eines silikatischen Trägermaterials aus der Reihe der Gläser, insbesondere Borsilikatgläser, werden entsprechende Quellen für SiO₂, B₂O₃, Al₂O₃, RO und R^{'}₂O, wobei R für ein Element der zweiten Haupt- oder Nebengruppe und R^{'} für ein Alkalimetall steht, im gewünschten molaren Verhältnis in einer wäßrigen Lösung gelöst. Als Quelle für B₂O₃ eignet sich insbesondere Tetraborsäure (H₂B₄O₇).

Bei der Zubereitung der in ein Aerosol zu überführenden wäßrigen Lösung wird der Fachmann die einzelnen Komponenten vorzugsweise so auswählen, daß die in der Lösung enthaltenen oxid- und silikatbildenden Vorstufen als auch die eingesetzten Edelmetallverbindungen bis zum Vernebeln der wäßrigen Lösung homogen gelöst nebeneinander vorliegen. Sofern einzelne Bestandteile in suspendierter Form in der Lösung vorliegen, ist sicherzustellen, daß die Partikelgröße kleiner ist als diejenige der bei der Vernebelung erhaltenen Tröpfchen.

Die Edelmetallverbindungen und oxid- oder silikatbildenden Vorstufen werden zweckmäßigerweise in einem Molverhältnis im Bereich von 1 zu 3 bis 1 zu 100 eingesetzt, wobei jedoch höhere und geringere Molverhältnisse nicht ausgeschlossen werden. Bevorzugt wird ein Molverhältnis im Bereich zwischen 1 zu 5 bis 1 bis 50. Zur Herstellung purpurfarbener Pigmente auf der Basis von kolloidal verteiltem Gold werden eine Goldverbindung und eine oxid- oder silikatbildende Vorstufe in einem solchen Verhältnis in der wäßrigen Lösung eingesetzt, daß das Pigment Gold in einer Menge zwischen 0,1 und 40 Gew.-%, insbesondere zwischen 0,5 und 25 Gew.-%, enthält.

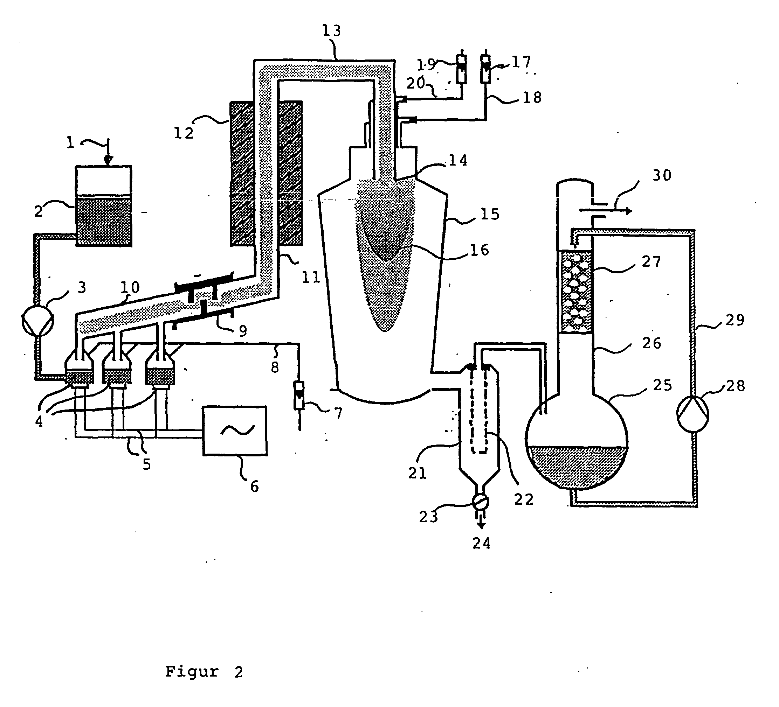

Das Prinzip einer bevorzugten Ausführungsform einer Vorrichtung zur Durchführung des erfindungsgemäßen Verfahrens folgt aus der schematischen Darstellung der Figur 2. Wesentliche Elemente der Vorrichtung sind ein Vorratsbehälter (2) für die zu vernebelnde Flüssigkeit, ein Hochfrequenzgenerator (6) mit zugehörigen Ultraschwingern (4), ein Tröpfchenabscheider (9), ein Vortrockner (11 mit 12), der eigentliche Pyrolysereaktor (15) mit Zufuhrleitungen für das vorgetrocknete Aerosol (13 mit 14), das Brenngas (20) und die Luft oder Sauerstoff (18), eine Vorrichtung zur Gas-Feststofftrennung (21)., umfassend ein Filterelement (22) und eine Entnahmevorrichtung für den Feststoff (23 mit 24), eine Waschvorrichtung für das von Feststoffen befreite Reaktionsgas, umfassend eine Blase (25) und eine mit Füllkörpern (27) befüllte Waschkolonne (26), eine Umlaufleitung (29) mit einer Umlaufpumpe sowie einen Auslass für das Abgas. Bezüglich weiterer Einzelheiten wird auf die Bezugszeichenliste verwiesen.

### Bezugszeichenliste

- 1: Zufuhrleitung
- 2: Vorratsbehälter
- 3: Pumpe
- 4: Ultraschallschwinger (Transducer mit Gefäß und Trägergaszufuhrstutzen) (=Aerosolgenerator)
- 5: Steuerleitungen zu den Schwingern
- 6: Hochfrequenzgenerator
- 7: Rotameter
- 8: Gasleitung für Trägergas
- 9: Tropfenabscheider
- 10: Sammelrohr
- 11: Vortrockner
- 12: Heizaggregat
- 13: Aerosolzufuhr zum Reaktor
- 14: Düse
- 15: Pyrolysereaktor
- 16: Flamme
- 17, 19: Rotameter
- 18: Gasleitung für Luft oder O₂
- 20: Gasleitung für H₂
- 21: Abscheider
- 22: Filterelement
- 23: Absperrorgan
- 24: Pigmentaustrag
- 25: Blase
- 26: Kolonne
- 27: Kolonnen-Füllkörper
- 28: Umlaufpumpe
- 29: Umlaufleitung
- 30: Abgasleitung

Zur Überführung der eine oder mehrere Edelmetallverbindungen und eine oder mehrere oxid- oder silikatbildende Vorstufen enthaltenden Lösung in einen feinen Nebel kommen übliche Vorrichtungen zur Vernebelung infrage, die sich allerdings hinsichtlich der erreichbaren Tropfengröße, der Größenverteilung der Tropfen, des Durchsatzes, des Fluid-Treibgasverhältnisses und der Ausströmgeschwindigkeit unterscheiden. Zweistoffdüsen sind in der Lage, große Mengen Flüssigkeit durchzusetzen; die kleinste erreichbare mittlere Tröpfchengröße liegt üblicherweise bei etwa 10 µm; zur Herstellung eines besonders feinen Pigmentpulvers muß gegebenenfalls eine stärker verdünnte Lösung eingesetzt werden. Mittels Ultraschall unterstützten Düsen ist es möglich, eine höhrere Tröpfchenfeinheit zu erzielen, so daß auch Pulver mit einem Korndurchmesser von kleiner 1 µm erhältlich sind. Mittels eines gasgetriebenen Aerosolerzeugers, etwa eines Collison®-Verneblers, ist es möglich, ein sehr feines Tröpfchenspektrum im Bereich von 3 µm zu erhalten, jedoch ist das Verhältnis von Trägergas zu Flüssigkeitsmenge ungünstig, so daß nur geringe Leistungen erzielt werden können. Mittels elektrostatischer Sprühverfahren ist es möglich, Nebel im Sub-Mikronbereich zu erzeugen, jedoch läßt sich mit derzeit bekannten Systemen nur ein niedriger Durchsatz realisieren. Bevorzugte Vernebler sind Ultraschallvernebler, womit problemlos Nebel mit einer Tröpfchengröße von etwa 3 bis 4 µm erhältlich sind. Außerdem ist es bei Ultraschallverneblern problemlos möglich, das Verhältnis von Gas zu Flüssigkeit frei zu variieren. Um einen ausreichenden Durchsatz zu erzielen, ist es möglich, mehrere Ultraschallschwinger miteinander zu koppeln. Das Funktionsprinzip eines Ultraschallverneblers beruht auf der Umwandlung von mechanischer (Schall-)Energie in Oberflächenenergie des Lösungsmittels. Ein Ultraschallschwinger (Transducer), eine flache runde Scheibe aus Piezokeramik wird durch hochfrequente Anregung zur Dickenschwingung angeregt. Die Schwingung überträgt sich auf die über einer Kalotte stehende Flüssigkeitssäule, an deren Oberfläche durch Kavitationseffekte eine Fontäne entsteht, die in kleinste Tröpfchen zerfällt. Bei der Auswahl der Schwinger ist dafür Sorge zu tragen, daß es bei den häufig sauren Lösungen nicht zu Korrosionserscheinungen kommt; Silicon-beschichtete Schwinger haben sich bewährt.

Die Schwinger sind an den Böden der miteinander verbundenen Gefäße im Winkel von einigen Grad angebracht (die Verbindungsleitungen zwischen den in Figur 2 dargestellten Ultraschwinger (Transducer mit Gefäß) sind aus Übersichtlichkeitsgründen nicht dargestellt). Die durch Vernebelung verbrauchte Flüssigkeitsmenge wird von einem Vorratsbehälter (2) unter Konstanthaltung des Flüssigkeitsspiegels nachgeführt. Jeder Aerosolgenerator wird separat mit Trägergas versorgt, welches über ein Rotameter (7) und Leitung (8) zugeführt wird. Die einzelnen Aerosolströme der Aerosolgeneratoren werden in einem Sammelrohr (10) vereinigt. Sofern das Tröpfchenspektrum des Aerosols teilweise zu große Tröpfchen enthält, die zu zu großen Feststoffpartikeln führen würden, ist es zweckmäßig, zu große Tröpfchen mittels eines Tröpfchenseparators (9) abzuscheiden. Es ist zweckmäßig, den Tröpfchenabscheider derart auszulegen, daß Tröpfchen mit einem Durchmesser von größer 10 µm, gegebenenfalls auch einem maximalen Tröpfchendurchmesser im Bereich zwischen 5 und 10 µm, abzuscheiden und die Lösung in den Generator zurückzuführen. Die Funktion des Tröpfchenabscheiders beruht auf einer Beschleunigung des Aerosols und einer anschließenden Umlenkung der Strömung, wobei die großen Tröpfchen an einer senkrecht zur Strömung stehenden Platte abgeschieden werden. Je nach dem gewünschten maximalen Tröpfchendurchmesser kann die Abscheiderate bis zu 50 % und darüber betragen.

Um möglichst kugelförmige Feststoffpartikel zu erhalten, hat es sich als vorteilhaft erwiesen, das Aerosol vor dem Eintritt in den Pyrolysereaktor vorzutrocken, beispielsweise in einem Strömungsrohr (11) mit einem darum angeordneten Heizaggregat (12). Die in den Tröpfchen ablaufenden Prozeßschritte, nämlich Verdampfen des Lösungsmittels, Ausfällen der Vorstufen des oxid- oder silikatbildenden Materials sowie der Edelmetallverbindung, Trocknung, Zersetzung und anschließende Sinterung benötigen unterschiedliche Zeitspannen, wovon das Verdampfen des Lösungsmittels der langsamste Schritt ist. Daher ist es günstig, das Aerosol in einer dem Flammenreaktor vorgeschalteten Trocknungsvorrichtüng, etwa einem beheizten Rohr, ganz oder teilweise vorzutrocknen. Wird auf die Vortrocknung verzichtet, so besteht die Gefahr, daß ein Produkt mit breiterem Kornspektrum und insbesondere zu viel Feinanteil erhalten wird. Die Temperatur des Vortrockners richtet sich nach der Konzentration der gelösten Vorstufen als auch der Auswahl derselben. Üblicherweise liegt die Temperatur im Vortrockner oberhalb des Siedepunktes des Lösungsmittels bis 250 °C; bei Wasser als Lösungsmittel liegt die Temperatur im Vortrockner vorzugsweise zwischen 120 und 250 °C, insbesondere zwischen 150 und 200 °C.

Das über eine Leitung (13) dem Pyrolysereaktor (15) zugeführte vorgetrocknete Aerosol tritt über eine Austrittsöffnung (14) in den Reaktor ein. Bei der in der Figur dargestellten Ausführungsform tritt der über ein Rotameter (19) und eine Leitung (20) zugeführte Wasserstoff durch einen um die Aerosolzufuhrleitung gelegten konzentrischen Ring ein. Die über eine Rotameter (17) und eine Leitung (18) zugeführte Sekundärluft wird durch einen weiteren konzentrischen Ring eingeleitet. Durch diese Anordnung ergeben sich ausgeglichene Impulsstromdichten.

Die Art der Zufuhr des Aerosols, des Brenngases und der Sekundärluft sind jedoch nicht auf die in der Figur dargestellte Ausführungsform beschränkt. Zur Erzeugung einer Flamme (16) enthält der Reaktor zusätzlich eine in der Figur nicht gezeigte Zündvorrichtung. Um ein ausgeglichenes Temperaturprofil zu erzeugen, wird der Brennraum, der vorzugsweise rohrförmig ausgebildet ist, isoliert (nicht gezeigt). An den Brennraum des Reaktors schließt sich eine Kühlzone an; im Reaktor gemäß Figur 2 ist die Kühlzone der untere (flammenfreie) Teil des Reaktors.

Das Feststoffpartikel enthaltende Reaktionsgas tritt nach Verlassen des Reaktors in teilweise abgekühlter Form in eine Vorrichtung (21) zur Trennung der Feststoffpartikel vom Reaktionsgas ein. Diese Trennvorrichtung umfaßt ein Filterelement (22), ein Absperrorgan (23), das zum Pigmentaustrag (24) führt. Vorteilhafte Filterelemente sind Sintermetallfilter und Keramikfilter, wobei letztere besonders bevorzugt werden, da sie bis zu 500 °C einsetzbar sind und lange Abkühlstrecken vermieden werden können. Das das Filterelement passierende Abgas wird in einer Waschvorrichtung (25 bis 29) gewaschen und tritt über die Abgasleitung (30) aus. Sofern mittels der Abscheidevorrichtung nicht alle Feststoffpartikel und damit auch Edelmetalle zurückgehalten werden konnten, sammeln sich diese Stoffe in der Waschflüssigkeit an und können einer Aufbereitung zugeführt werden.

Das erfindungsgemäße Verfahren erlaubt die Herstellung von Pigmenten aus im wesentlichen kugelförmigen Partikeln, wobei die mittlere Korngröße und die Korngrößenverteilung leicht durch die Verfahrensparameter eingestellt werden können. Bisher notwendige Mahlprozesse bei der Pigmentherstellung sind überflüssig.

Die erfindungsgemäßen kugelförmigen Pigmente lassen sich zur Herstellung von keramischen Dekoren sowie zum Einfärben von Kunststoffen, synthetischen Folien und Fasern sowie Lacken verwenden. Aufgrund der hohen Feinteiligkeit der Pigmente lassen sie sich mit anderen Komponenten anwendungsspezifisch zusammengesetzter Farben trocken mischen. Bisher übliche Mahlprozesse sind überflüssig; damit kommt es auch nicht zu einer Verunreinigung durch die Mahlaggregate und damit der Gefahr einer Verfärbung des Pigments. Durch die hohe Feinteiligkeit ist es auch möglich, äußerst dünne Dekorschichten zu erzielen sowie Folien und Fasern während ihres Herstellungsprozesses einzufärben. Ein weiterer Vorteil ist die verbesserte Siebdruckfähigkeit von erfindungsgemäße Farbpigmente enthaltenden Farbpasten, indem durch die Kugelform des Pigments in Verbindung mit dem engen Kornspektrum und der weitgehenden Abwesenheit eines Überkorns mit einem Durchmesser von größer 10 µm oder sogar größer 5 µm ein verbesserter Siebdurchgang erzielt wird. Durch die Feinteiligkeit der Pigmente in Verbindung mit deren Kugelgestalt werden Betriebsstörungen und Korrosionsprobleme an Spinndüsen und Austrittsöffnungen bei der Folienherstellung vermieden.

Die Erfindung wird anhand der nachfolgenden Beispiele näher erläutert.

### Beispiele 1 bis 6

Die Herstellung verschiedener Pigmente erfolgte in einer Vorrichtung gemäß Figur 2, so daß auf die Beschreibung der Vorrichtung nicht erneut eingegangen wird.

Eingesetzt wurden in allen Beispielen wäßrige Lösungen, welche sowohl eine Edelmetallverbindung als auch eine oxidbildende Vorstufe enthielten. Die Zusammensetzung der Lösungen sind Tabelle 1 zu entnehmen. Trägergas für das Aerosol war Luft, Brenngas Wasserstoff. Der Tröpfchenabscheider rezyklierte Tröpfchen mit einem Durchmesser von größer 8 µm. Die Temperatur im Vortrockner betrug 150 °C in den Beispielen 1 bis 3 und 5 bis 6 und 200 °C in Beispiel 4.

Reaktor: Reaktorlänge 900 mm, mittlere Weite 125 mm, Aerosoldüse im Reaktor d = 46 mm; H₂-Ringdüse von 52 bis 54 mm; Luft-Ringdüse von 61 auf 80 mm. Der Reaktor enthielt im oberen (To), mittleren (Tm) und unteren (Tu) Drittel eine Temperaturmeßsonde. Im Beispiel 4 betrugen die Temperaturen To = 836 °C, Tm = 761 °C, Tu = 514 °C.

Das Pyrolysegas wurde im unteren Teil des Reaktors auf etwa 500 °C abgekühlt. Anschließend wurde das Pigment mittels eines Keramikfilters vom Pyrolysegas abgetrennt.

Die Stoffdaten der erhaltenen Pigmente einschließlich der Farbdaten sind der Tabelle 2 zu entnehmen. Figur 1 zeigt eine REM-Aufnahme des Pigments des Beispiels 3. Die coloristische Erprobung der hergestellten Pigmente erfolgte durch Direktdruck, teilweise auch durch Indirektdruck (Abziehbildtechnik).

Die Pigmente wurden jeweils in üblicher Weise im Verhältnis 1 zu 9 mit einem Fluß (Nr. 10150 der Fa. Cerdec AG) gemischt und mit einem Medium (Nr. 80820 der Fa. Cerdec AG) angepastet.

Die Farben beziehungsweise die Abziehbilder wurden auf Steingut beziehungsweise Porzellan aufgebracht und eingebrannt: Aufheizzeit 400 K/min, Brenntemperatur 800 °C, Haltezeit 12 min. Die Farbwertmessung erfolgt nach CIELAB (DIN 6174).

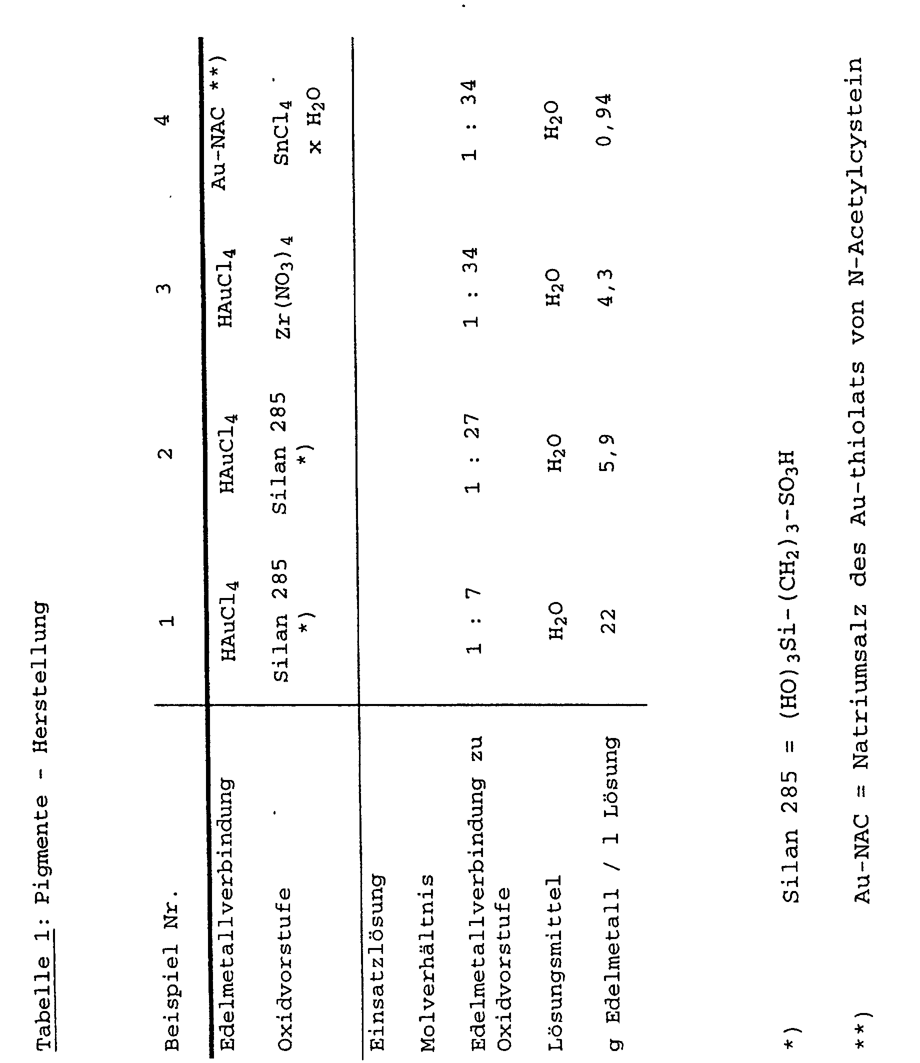

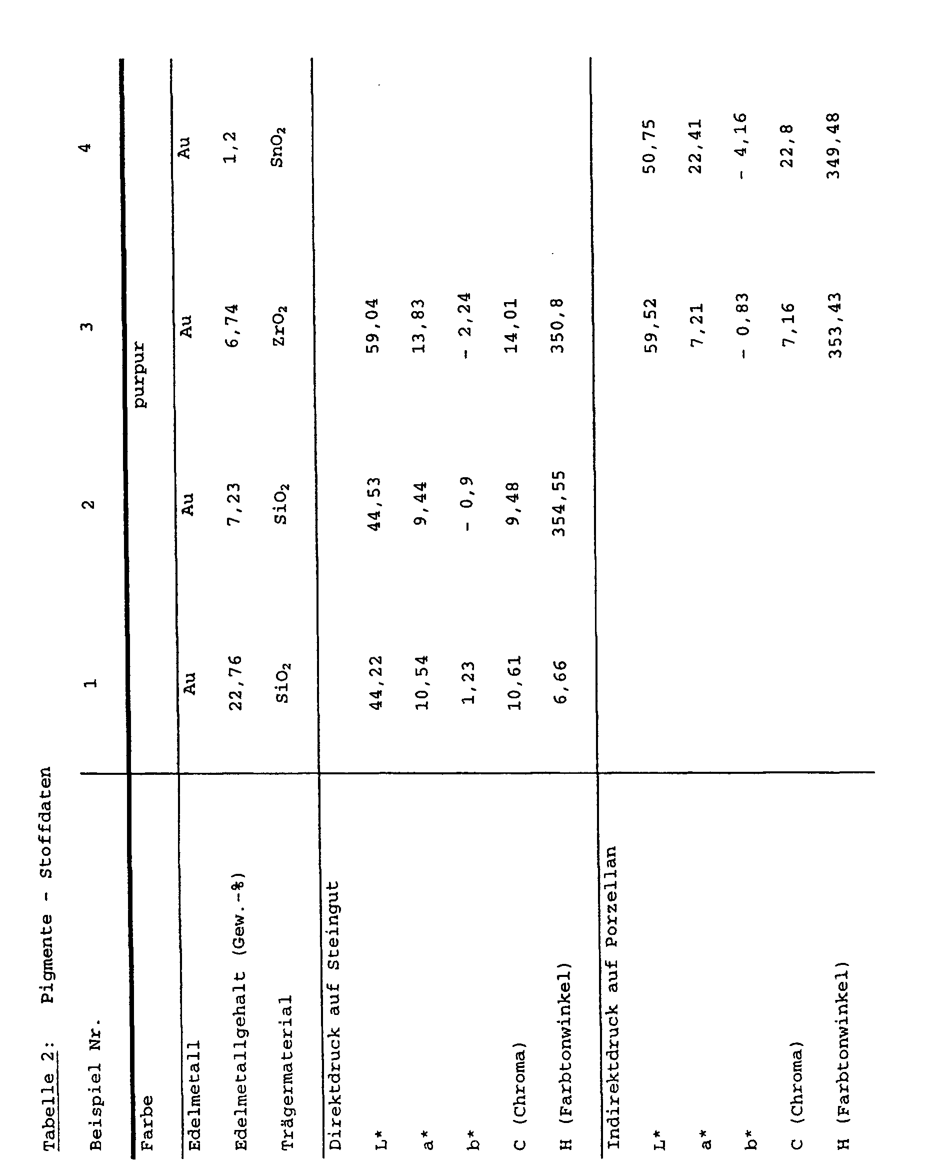

## Patentansprüche

1. Purpurfarbenes Pigment aus im wesentlichen kugelförmigen Teilchen mit einem mittleren Teilchendurchmesser von kleiner 10 um auf der Basis eines oxidischen oder silikatischen Trägermaterials mit auf und/oder in den Teilchen feinst verteiltem Edelmetall aus der Reihe Gold und gegebenenfalls zusätzlich Silber und/oder Platin, erhältlich durch Pyrolyse eines Aerosols, enthaltend eine Verbindung des Trägermaterials und Edelmetalls.

2. Pigment nach Anspruch 1,
**dadurch gekennzeichnet,**
**daß** es bis zu 10 Gew.-% Silber und/oder Platin, bezogen auf Gold, enthält.

3. Pigment nach Anspruch 1 oder 2,
**dadurch gekennzeichnet,**
**daß** es als oxidisches Trägermaterial ein solches aus der Reihe von SiO₂, SnO₂, TiO₂, ZrO₂, Al₂O₃, MgAl₂O₄, Ta₂O₅ und Bi₂O₃ und als silikatisches Trägermaterial ein solches aus der Reihe von Zirkonsilikat, Aluminiumsilikat und Borsilikatgläsern enthält.

4. Pigment nach einem der Ansprüche 1 bis 3,
**dadurch gekennzeichnet,**
**daß** es Edelmetall in einer Menge von 0,1 bis 40 Gew.-%, insbesondere 0,5 bis 25 Gew.-%, enthält.

5. Pigment nach einem der Ansprüche 1 bis 4,
**dadurch gekennzeichnet,**
**daß** 80 % der Pigmentteilchen einen Teilchendurchmesser im Bereich von 0,5 bis 5 µm aufweisen.

6. Verfahren zur Herstellung eines Pigments, bestehend aus im wesentlichen kugelförmigen Teilchen, gemäß einem der Ansprüche 1 bis 5,
**dadurch gekennzeichnet,**
**daß** es die Schritte umfaßt:
(i) Zubereitung einer eine oder mehrere Edelmetallverbindungen enthaltenden Lösung, Suspension oder Emulsion,
(ii) Überführung der Lösung, Suspension oder Emulsion in ein Aerosol,
(iii) Einbringen des Aerosols in einen direkt oder indirekt beheizten Pyrolysereaktor, dem gleichzeitig eine oder mehrere unter Pyrolysebedingungen ein oxidisches oder silikatisches Trägermaterial bildende Vorstufen in Aerosolform zugeführt werden,
(iv) Durchführung der Pyrolyse bei einer Temperatur oberhalb der Zersetzungstemperatur der Edelmetallverbindungen und mindestens der Bildungstemperatur des Trägermaterials aus den oxid- oder silikatbildenden Vorstufen und
(v) Abscheidung des Pigments aus dem Pyrolysegas.

7. Verfahren nach Anspruch 6,
**dadurch gekennzeichnet,**
**daß** man aus einer oder mehreren oxid- und/oder silikatbildenden Vorstufen, einer oder mehreren Edelmetallverbindungen und einem Lösungsmittel eine Lösung zubereitet, diese in ein Aerosol überführt und dieses, zweckmäßigerweise nach Passage eines Tröpfchenseparators, dem Pyrolysereaktor zuführt.

8. Verfahren nach Anspruch 6 oder 7,
**dadurch gekennzeichnet,**
**daß** man das oder die Aerosole vor dem Einbringen in den Pyrolysereaktor, vorzugsweise nach Passage eines Tröpfchenseparators, bei einer Temperatur im Bereich von oberhalb des Siedepunkts der Lösungsmittel bis 250 °C vortrocknet.

9. Verfahren nach einem der Ansprüche 6 bis 8,
**dadurch gekennzeichnet,**
**daß** man als Lösungsmittel Wasser oder ein überwiegend Wasser enthaltendes Lösungsmittelgemisch verwendet.

10. Verfahren nach einem der Ansprüche 6 bis 9,
**dadurch gekennzeichnet,**
**daß** man den Pyrolysereaktor direkt, vorzugsweise mittels einer Knallgasflamme (H₂/O₂ oder H₂/Luft) beheizt.

11. Verfahren nach einem der Ansprüche 6 bis 10,
**dadurch gekennzeichnet,**
**daß** man dem Pyrolysereaktor die Edelmetallverbindungen und oxid- oder silikatbildenden Vorstufen in einem Molverhältis im Bereich von 1 zu 3 bis 1 zu 100, vorzugsweise im Bereich von 1 zu 5 bis 1 zu 50, zuführt.

12. Verfahren nach einem der Ansprüche 6 bis 11,
**dadurch gekennzeichnet,**
**daß** man als SiO₂ oder silikatbildende Metallverbindung ein im wesentlichen wasserlösliches Organosilan oder -silanol der allgemeinen Formel (RO)₃Si-(CH₂)ₙ-X oder [(RO)₃Si- (CH₂)ₘ-NR'₃]⁺A⁻ oder wasserlösliche Kondensate dieser Verbindungen verwendet, worin R und R' gleich oder verschieden sein können und für Wasserstoff, Methyl oder Ethyl, n für die Zahl 1, 2 oder 3, m für die Zahl 2 oder 3, X für die Gruppe -COOH oder -SO₃H oder ein Salz hiervon und A für ein Anion, insbesondere Chlorid, stehen.

13. Verfahren nach einem der Ansprüche 6 bis 12,
**dadurch gekennzeichnet,**
**daß** man für ein im wesentlichen wäßriges Aerosol als Vorstufe für ZrO₂ Zirconiumtetranitrat, als Vorstufe für SnO₂ ein Zinntetrachlorid-hydrat, als Vorstufe für Al₂O₃ Aluminiumnitrat, -sulfat oder -acetat oder ein Hydrat dieser Salze einsetzt.

14. Verfahren nach einem der Ansprüche 6 bis 13,
**dadurch gekennzeichnet,**
**daß** man als Edelmetallverbindung eine im wesentlichen wasserlösliche Goldverbindung aus der Reihe von HAuCl₄, MeAu(CN)₂, Me₃Au(SO₃)₂, wobei Me für ein Alkalimetall steht, Gold-amminkomplexen und Gold(I)thiolaten, insbesondere Gold(I)-N-acetylcystein, Gold(I)propionylglycin, und Gold(I)dithiolaten, insbesondere Monogold(I)dimercaptobernsteinsäure, einsetzt.

15. Verfahren nach einem der Ansprüche 6 bis 14,
**dadurch gekennzeichnet,**
**daß** man eine im wesentlichen wäßrige Lösung, enthaltend eine Goldverbindung, und eine oder mehrere wasserlösliche oxid- oder silikatbildende Vorstufen im Molverhältnis 1 zu 5 bis 1 zu 50, mittels eines Ultraschallverneblers in ein Aerosol überführt, dieses nach Passage eines Tröpfchenseparators zwecks Abscheidung von Tröpfchen mit einem Durchmesser von größer etwa 10 µm durch einen auf im Bereich von 120 bis 180 °C beheizten Vortrockner leitet, das vorgetrocknete Aerosol einem mittels einer Knallgasflamme direkt beheizten Pyrolysereaktor zuführt und das Pigment mittels eines Sintermetall- oder Keramikfilters vom Pyrolysegas abtrennt.

## Claims

1. Purple-coloured pigment consisting of substantially spherical particles with a mean particle diameter of less than 10 µm on the basis of an oxidic or silicate substrate material, containing noble metal distributed extremely finely on and/or in the particles from the series gold and optionally additionally silver and/or platinum, obtainable by pyrolysis of an aerosol containing a compound of the substrate material and noble metal.

2. Pigment according to claim 1,
**characterised in that**
it contains up to 10 wt % of silver and/or platinum, referred to gold.

3. Pigment according to claim 1 or 2,
**characterised in that**
it contains as oxidic substrate material one such from the series of SiO₂, SnO₂, TiO₂, ZrO₂, Al₂O₃, MgAl₂O₄, Ta₂O₅ and Bi₂O₃ and as silicate substrate material one such from the series of zirconium silicate, aluminium silicate and borosilicate glasses.

4. Pigment according to one of claims 1 to 3,
**characterised in that**
it contains noble metal in an amount from 0.1 to 40 wt %, in particular 0.5 to 25 wt %.

5. Pigment according to one of claims 1 to 4,
**characterised in that**
80% of the pigment particles have a particle diameter in the range from 0.5 to 5 µm.

6. Process for producing a pigment, consisting of substantially spherical particles, according to one of claims 1 to 5, **characterised in that**
it incorporates the steps:
(i) preparation of a solution, suspension or emulsion containing one or more noble metal compounds,
(ii) conversion of the solution, suspension or emulsion into an aerosol,
(iii) introduction of the aerosol into a directly or indirectly heated pyrolysis reactor to which are simultaneously fed in aerosol form one or more precursors forming an oxidic or silicate substrate material under pyrolysis conditions,
(iv) carrying out of the pyrolysis at a temperature above the decomposition temperature of the noble metal compounds and at least the temperature of formation of the substrate material consisting of the oxide- or silicate-forming precursors and
(v) separation of the pigment from the pyrolysis gas.

7. Process according to claim 6,
**characterised in that**
a solution is prepared from one or more oxide- or silicate-forming precursors, one or more noble metal compounds and a solvent, this solution is converted into an aerosol and said aerosol, with advantage after passage through a droplet separator, is fed to the pyrolysis reactor.

8. Process according to claim 6 or 7,
**characterised in that**
the aerosol or aerosols are prior to the introduction into the pyrolysis reactor, preferably after passage through a droplet separator, pre-dried at a temperature in the range from above the boiling point of the solvents to 250 °C.

9. Process according to one of claims 6 to 8,
**characterised in that**
water or a solvent mixture containing predominantly water is used as solvent.

10. Process according to one of claims 6 to 9,
**characterised in that**
the pyrolysis reactor is heated directly, preferably by means of a detonating gas flame (H₂/O₂ or H₂/air).

11. Process according to one of claims 6 to 10,
**characterised in that**
the noble metal compounds and oxide- or silicate-forming precursors are fed to the pyrolysis reactor in a molar ratio in the range from 1 to 3 to 1 to 100, preferably in the range from 1 to 5 to 1 to 50.

12. Process according to one of claims 6 to 11,
**characterised in that**
there is used as SiO₂ or silicate-forming metal compound a substantially water-soluble organosilane or organosilanol with the general formula (RO)₃Si-(CH₂)ₙ)-X or [(RO)₃Si-(CH₂)ₘ₋NR'₃]⁺A⁻ or water-soluble condensates of said compounds, where R and R' can be the same or different and stand for hydrogen, methyl or ethyl, n stands for the number 1, 2 or 3, m for the number 2 or 3, X for the group -COOH or -SO₃H or a salt thereof and A⁻ for an anion, in particular chloride.

13. Process according to one of claims 6 to 12,
**characterised in that**
use is made for a substantially aqueous aerosol of zirconium tetranitrate as a precursor for ZrO₂, of a tin tetrachloride-hydrate as a precursor for SnO₂, and of aluminium nitrate, sulfate or acetate or a hydrate of said salts as a precursor for Al₂O₃.

14. Process according to one of claims 6 to 13,
**characterised in that**
there is used as noble metal compound a substantially water-soluble gold compound from the series of HAuCl₄, MeAu(CN)₂, Me₃Au(SO₃)₂, where Me stands for an alkali metal, gold-ammine complexes and gold(I)- thiolates, in particular gold(I)-N-acetylcysteine, gold(I)propionylglycine, and gold(I)dithiolates, in particular monogold(I)dimercaptosuccinic acid.

15. Process according to one of claims 6 to 14,
**characterised in that**
a substantially aqueous solution, containing a gold compound and one or more water-soluble oxide- or silicate-forming precursors in the molar ratio 1 to 5 to 1 to 50, are converted into an aerosol by means of an ultrasonic nebuliser, said aerosol is after passage through a droplet separator for the purpose of separating droplets with a diameter of greater than about 10 µm conveyed through a pre-drier heated to in the range from 120 to 180 °C, the pre-dried aerosol is fed to a pyrolysis reactor heated directly by means of a detonating gas flame and the pigment is separated from the pyrolysis gas by means of a sintered metal or ceramic filter.

16. Use according to one of claims 1 to 5 and of the spherical pigments obtainable by the process of claims 6 to 15 for the production of ceramic decors and for the dyeing of plastics, synthetic films and fibres and also paints.

## Revendications

1. Pigment de couleur pourpre constitué pour l'essentiel de particules sphériques ayant un diamètre particulaire moyen inférieur à 10 µm à base d'un support comportant un ou plusieurs oxydes ou silicates avec sur et/ou dans les particules un métal noble très finement divisé, de la série de l'or et le cas échéant en outre de l'argent et/ou du platine que l'on peut obtenir par pyrolyse d'un aérosol, contenant un composé du support et du métal noble.

2. Pigment selon la revendication 1,
**caractérisé en ce qu'**
il contient jusqu'à 10 % en poids d'argent et/ou de platine, par rapport à l'or.

3. Pigment selon la revendication 1 ou 2,
**caractérisé en ce qu'**
il contient comme support comportant un oxyde un support de la série constituée par SiO₂, SnO₂, TiO₂, ZrO₂, Al₂O₃, MgAl₂O₄, Ta₂O₅ et Bi₂O₃ et comme support comportant un silicate un support de la série du silicate de zirconium, de silicate d'aluminium et des verres de silicate de bore.

4. Pigment selon l'une des revendications 1 à 3,
**caractérisé en ce qu'**
il contient un métal noble en une quantité de 0,1 à 40 %, en particulier de 0,5 à 25 % en poids.

5. Pigment selon l'une des revendications 1 à 4,
**caractérisé en ce que**
80 % des particules de pigment présentent un diamètre particulaire allant de 0,5 à 5 µm.

6. Procédé de fabrication d'un pigment, constitué pour l'essentiel de particules essentiellement sphériques, selon l'une des revendications 1 à 5,
**caractérisé en ce qu'**
il comprend les étapes suivantes :
(i) préparation d'une solution, suspension ou émulsion contenant un ou plusieurs composés de métal noble,
(ii) transformation de la solution, suspension ou émulsion en un aérosol,
(iii) apport de l'aérosol dans un réacteur de pyrolyse direct ou indirect chauffé, auquel on ajoute simultanément un ou plusieurs précurseurs formant dans les conditions de la pyrolyse un support comportant un ou plusieurs oxydes ou silicates, sous forme d'aérosol,
(iv) réalisation de la pyrolyse à une température supérieure à la température de décomposition des métaux nobles et au moins à la température de formation du support à partir des précurseurs formant un ou plusieurs oxydes ou silicates et
(v) séparation du pigment à partir du gaz de pyrolyse.

7. Procédé selon la revendication 6,
**caractérisé en ce qu'**
on prépare une solution à partir d'un ou plusieurs précurseurs formant un ou plusieurs oxydes et/ou silicates, d'un ou plusieurs composés de métal noble et d'un solvant, on transforme cette solution en un aérosol et on introduit celui-ci dans le réacteur de pyrolyse, en pratique après passage d'un séparateur de gouttelettes.

8. Procédé selon la revendication 6 ou 7,
**caractérisé en ce qu'**
on effectue un préséchage du ou des aérosols avant de le ou de les introduire dans le réacteur de pyrolyse, de préférence après passage d'un séparateur de gouttelettes, à une température allant d'au-dessus de la température d'ébullition du solvant jusqu'à 250°C.

9. Procédé selon l'une des revendications 6 à 8,
**caractérisé en ce qu'**
on utilise comme solvant l'eau ou un mélange de solvants contenant principalement de l'eau.

10. Procédé selon l'une des revendications 6 à 9,
**caractérisé en ce qu'**
on chauffe le réacteur à pyrolyse directement, de préférence au moyen d'une flamme de gaz détonnant (H₂O₂ ou H₂/R).

11. Procédé selon l'une des revendications 6 à 10,
**caractérisé en ce qu'**
on introduit dans le réacteur de pyrolyse les composés de métaux nobles ou les précurseurs formant oxydes ou silicates dans un rapport molaire allant de 1 à 3 allant de 1 à 100, de préférence dans un intervalle allant de 1 à 5 à 1 à 50.

12. Procédé selon l'une des revendications 6 à 11,
**caractérisé en ce qu'**
on utilise comme composé métallique formateur de SiO₂ ou de silicate un organosilane ou organosilanol essentiellement soluble dans l'eau, de formule générale (RO)₃Si-(CH₂)ₙ-X ou [(RO)₃Si-(CH₂)ₘ-NR'₃]⁺A⁻ ou des produits de condensation de ces composés, dans lesquels R et R' peuvent être identiques ou différents et représentent l'hydrogène, le méthyle ou l'éthyle, n représente le nombre 1, 2 ou 3, m le nombre 2 ou 3, X représente le groupe -COOH ou -SO₃H ou un de ses sels et A⁻ représente un anion, en particulier le chlorure.

13. Procédé selon l'une des revendications 6 à 12,
**caractérisé en ce qu'**
on utilise comme aérosol essentiellement aqueux, en tant que précurseur de ZrO₂, le tétranitrate de zirconium, en tant que précurseur de SnO₂ un tétrachlorure d'étain hydraté, en tant que précurseur d'Al₂O₃ le nitrate, le sulfate ou l'acétate d'aluminium, ou un hydrate de ces sels.

14. Procédé selon l'une des revendications 6 à 13,
**caractérisé en ce qu'**
on utilise comme composé de métal noble un composé d'or essentiellement soluble dans l'eau, de la série constituée par HAuCl₄, MeAU(CN)₂, Me₃Au(SO₃)₂, où Me représente un métal alcalin, des complexes d'orammine et des thiolates d'or (I), en particulier la N-acétyl cystéine d'or (I), la propionyl glycine d'or (I) et les dithiolates d'or (I), en particulier l'acide mono aurique (I) dimercapto succinique.

15. Procédé selon l'une des revendications 6 à 14,
**caractérisé en ce qu'**
on transforme en un aérosol une solution essentiellement aqueuse contenant un composé d'or, et un ou plusieurs formateurs d'oxyde ou de silicate et soluble dans l'eau dans un rapport molaire de 1 à 5 à 1 à 50, au moyen d'un nébuliseur à ultrasons, on fait passer cet aérosol, après passage d'un séparateur de gouttelettes pour séparer les gouttelettes ayant un diamètre supérieur à environ 10 µm, à travers un appareil de préséchage chauffé dans un intervalle allant de 120 à 180°C, on introduit l'aérosol préchauffé dans un réacteur à pyrolyse chauffé directement au moyen d'une flamme de gaz détonnant et on sépare le pigment du gaz de pyrolyse au moyen d'un filtre en métal fritté ou en céramique.

16. Utilisation de pigments selon l'une des revendications 1 à 5, ainsi que des pigments sphériques que l'on peut obtenir selon le procédé des revendications 6 à 15, pour la fabrication de décors céramiques pour la coloration de matières synthétiques, de feuilles synthétiques et de fibres ainsi que de laques.
